(19) Europäisches Patentamt
European Patent Office
Office européen des brevets

(11) EP 2 318 208 B1

(12) # EUROPEAN PATENT SPECIFICATION

(45) Date of publication and mention of the grant of the patent:
**17.01.2018 Bulletin 2018/03**

(21) Application number: **09791639.9**

(22) Date of filing: **19.08.2009**

(51) Int Cl.:
***B32B 27/00*** *(2006.01)* ***B32B 5/18*** *(2006.01)*
***F25D 23/08*** *(2006.01)*

(86) International application number:
**PCT/US2009/054243**

(87) International publication number:
**WO 2010/027655 (11.03.2010 Gazette 2010/10)**

(54) **MULTILAYER THERMOPLASTIC SHEET MATERIALS AND THERMOFORMED ARTICLES PREPARED THEREFROM**

MEHRLAGIGE THERMOPLASTISCHE BAHNMATERIALIEN UND DARAUS HERGESTELLTE THERMOFORMARTIKEL

MATÉRIAUX EN FEUILLE À BASE DE THERMOPLASTIQUE MULTICOUCHES ET ARTICLES THERMOFORMÉS PRÉPARÉS À PARTIR DE TELLS MATÉRIAUX

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.08.2008 US 91572 P**

(43) Date of publication of application:
**11.05.2011 Bulletin 2011/19**

(73) Proprietor: **Trinseo Europe GmbH**
**8810 Horgen (CH)**

(72) Inventors:
- **MEGALLY, Alexandra**
**NL-4531VW Terneuzen (NL)**
- **VOSSEN, Roeland**
**NL-4561VW Hulst (NL)**

(74) Representative: **Hoffmann Eitle**
**Patent- und Rechtsanwälte PartmbB**
**Arabellastraße 30**
**81925 München (DE)**

(56) References cited:
**WO-A1-03/020508**
**WO-A2-2009/120624**
**DE-U1-202009 007 494**
**US-A- 5 364 696**
**US-A1- 2002 121 716**
**US-B1- 6 589 646**

EP 2 318 208 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to multilayer thermoplastic sheet materials suitable for thermoforming applications including thermoforming of refrigerator liners. The present invention also relates to articles manufactured from multilayer sheet materials including thermoformed refrigerator liners and to a process for manufacturing articles, including thermoformed refrigerator liners, from such multilayer sheet materials.

Extruded thermoplastic sheet materials, depending upon selection of the thermoplastic base resin, are used in a wide range of applications including thermoforming into parts for consumer durable products such as refrigerator liners, enclosures of bathtub and shower units, various benches and seating units, body panels for various types of vehicles, sign panels, etc. Somewhat thinner extruded thermoplastic sheet materials can also be employed for thermoforming into packaging for a wide variety of materials such as foods, beverages, cleaning and laundry products, cosmetics, and pharmaceuticals or also used when extruded into continuous profiles.

With the current economical and environmental interests in improving the cost effectiveness and efficiency of products and processes for their production, there is a continuing interest in providing and obtaining thermoplastic sheet materials that facilitate the reduction of the amounts of raw materials and energy required in their production and in their further use to produce thermoformed articles. Thermoplastic sheets having a foamed thermoplastic layer and at least one unfoamed or solid thermoplastic layer are also known and referred to as AB structures (single solid skin and foam layers) and ABA structures (foam layer between two solid skin layers).

US Patent 6,544,450 teaches a process for producing a thermoplastic foam sheet comprising contacting a molten polymer with a blowing agent, foaming the mixture into a region of lower pressure within a sheet extrusion line, and pulling and compressing the extrudate to form a thermoplastic foam sheet having a uniform thickness. Sheet materials are shown having a foamed layer sandwiched between two non-foamed surface layers (ABA structure).

US Patent 6,589,646 teaches composite layered sheet or film with AB structures having at least one thicker solid substrate layer A having a thickness from 0.1 to 50 mm and at least one thinner, foamed functional layer B having a thickness from 0.04 to 2 mm. These are directed particularly for use in producing thermally insulating moldings such as refrigerator liners where polyurethane foam insulation is applied to the foamed surface.

GB 1,595,128 describes a pipe which is lighter in weight made from a thermoplastic material and having a central foam layer between two outer solid layers (ABA structure). The tube is produced by coextrusion and the material for the central layer comprises a blowing agent.

GB 1,411,132 describes moldings made from a closed-cell foam core having a smooth and glossy skin. The moldings are produced by extruding a thermoplastic which comprises a filler and a blowing agent. The surface of the extrusion die here is held at a temperature below the decomposition temperature of the blowing agent.

US Patent 5,364,696 teaches the use of foamed polystyrene sheet for thermoforming into deeply drawn articles optionally having an integral, high density skin.

EP-A 0084360 describes a shrink wrapping sheath made from a foamed and an unfoamed polystyrene layer. In order to achieve sufficient impact absorption the thickness of the foamed layer is from 0.1 to 1 mm. The thickness of the unfoamed layer is from 2 to 160 mm. It serves for printability and can be used as a protective layer for glass bottles.

US Patent 4,069,934 describes another shrink film made from an inner closed-cell foam layer made from polystyrene and ethylene-vinyl acetate copolymer and from an unfoamed outer layer made from polyethylene.

It has been found, however, that although these teachings provide some benefits in formable sheet materials, including weight reduction, there is a continuing interest in obtaining thermoplastic sheet materials that facilitate the reduction of the amounts of both raw materials and energy required in production of thermoformed articles. It has also been found specifically in the production of large, deeply thermoformed parts, such as refrigerator liners, that these teachings do not provide sufficient balances of properties needed for the liner products and the liner production process where polyurethane foams are applied to the surface of the thermoformed sheet materials. The main problem in this situation is obtaining the necessary performance, primarily stiffness or modulus, while obtaining a reduction in the raw materials needed. Alternatively, it would be desired to obtain improved performance in a product using otherwise similar levels of the raw materials. Other problems also include improving or maintaining the resistance to environmental stress cracking with sheet materials having reduced thermoplastic resin raw material usage.

Therefore, according to the present invention, solutions to one or more of these problems and many others are provided by a multilayer sheet having two surface layers and optionally one or more interior layers, said multilayer sheet comprising a non-foamed thermoplastic polymer surface layer (A), a foamed thermoplastic polymer layer (B) and an optionally non-foamed thermoplastic polymer surface layer (C) and having a total sheet thickness of from at least 0.75 to 20 millimeters ("mm") and a foam to solid thickness ratio of greater than 1 and wherein: (a) the non-foamed thermoplastic polymer surface layer (A) has a thickness in the range of from 0.75 to 6 millimeters ("mm) and (b) the foamed thermoplastic polymer layer (B) has a total density reduction of at least five (5) percent and, in the absence of optional surface layer (C), is a surface layer. In one embodiment the foam to solid thickness ratio is at least 1.86, preferably at least 2.33

In a further embodiment the multilayer sheet according to the invention has a density reduction of at least ten

(10) percent, preferably at least twenty (20) percent.

In a further alternate embodiment, in the multilayer sheet layer B comprises a foamed monovinylidene aromatic polymer resin selected from the groups of HIPS, GPPS, ABS, blends of two or more of these, and blends of one or more of these with one or more additional polymer. The present invention also includes embodiments where layers A and B are coextruded, layer A is film laminated onto layer B, or layer A is extrusion coated onto layer B. In a further alternative embodiment, layer B is foamed using a physical blowing agent or a chemical blowing agent or a combination of physical blowing agent and chemical blowing agent nucleating agent. In further embodiments, the present invention includes a thermoformed article prepared from a multilayer sheet as described above or according to the processes described below.

A process embodiment of the present invention is a thermoforming process comprising: heating a multilayer sheet as described herein to a heat softened, heat-plastified thermoformable state; applying gas, vacuum and/or physical pressure to the heat softened, heat-plastified, thermoformable sheet and stretching the sheet to nearly the final part size; conforming the sheet by vacuum or pressure to a mold shape; and separating the thermoformed part from the mold. A further process embodiment of the present invention is a process for preparing a thermally insulating molded part comprising: providing a thermally insulating foam layer to the foam surface layer side of a thermoformed part produced as described herein, wherein preferably the thermally insulating foam layer is a polyurethane foam, more preferably is provided in a cavity or space that has been provided between the thermoformed part foam surface layer and an exterior casing or enclosure structure which most preferably is a refrigerator cabinet or door. A further embodiment is a thermally insulating molded part prepared according to one or more of the processes described above.

BRIEF DESCRIPTION OF THE DRAWING

Figure 1 is a three-dimensional view of a thermoformed liner for the cabinet section of a refrigerator.

Figure 2 is a schematic of a thermoformed liner for the cabinet section of a refrigerator.

Figure 3 is a cross-section of a thermoformed and foamed liner located in the cabinet of a refrigerator.

The numerical ranges in this disclosure include all values from and including the lower and the upper values, in increments of one unit, provided that there is a separation of at least two units between any lower value and any higher value. As an example, if a compositional, physical or other property, such as, for example, thickness and density reduction, etc., is greater than 10, it is intended that all individual values, such as 10, 11, 12, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, thickness and density reduction.

The multilayer sheets according to the present invention are generally well suited for thermoforming applications and, for use in that application, will have specific thicknesses and surface layers as may be needed for the particular thermoforming application. In general, the thermoformable sheet materials will have a total thickness of at least 0.75, preferably at least 1, more preferably at least 1.25, more preferably at least 1.5, more preferably at least 1.75, and most preferably at least 2 millimeters, depending upon the depth to which the sheet needs to be drawn in the thermoforming process and the thickness required in a final thermoformed part or article. Depending also on the capabilities of the thermoforming process and needs for the draw depth and final part thickness, these sheet materials will have thicknesses of up to 20 millimeters, preferably up to 14 mm, preferably up to 12, more preferably up to 10, more preferably up to 8 and most preferably up to 5 mm.

As known in the practice of thermoforming, during the thermoforming step the starting thickness of the sheet will be reduced generally in proportion to the draw depth of the thermoforming step. The thermoformable sheets according to the present invention can be used with typical thermoforming draw ratios, many of which are in the range of from 1 to 5 and generally 2.5. The starting thickness of the sheet is typically determined by the necessity to provide a minimum thickness (e.g., 0.5 or 1 mm) in the thinnest area and/or at critical points in the thermoformed part. In the drawn down areas typical for thermoformed parts, the minimum thickness (thickness at the thinnest area) is at least 0.25 mm, preferably at least 0.5 mm, and the average thickness of the final thermoformed part will be in the range of from 0.5 to 2 millimeter, preferably about 1 mm. The sheet structures according to the present invention have been found to draw down particularly well, typically maintaining better thicknesses at critical and/or thin areas of the thermoformed part. This permits either reduced thickness in the starting sheet or, if starting from a given sheet thickness, improvements in the

final part as compared to prior art thermoformable sheet structures, based in either case on better thickness retention in the critical and/or thin area(s).

The foamed and non-foamed layers required in the sheet materials according to the present invention can be selected from a very broad range of thermoplastic polymers depending upon the requirements of their application. The range of thermoplastic polymers includes monovinylidene aromatic polymers (also referred to as styrenic polymers, including GPPS, HIPS, ABS and SAN), a broad range of polyolefins (including PE, PP, LDPE, LLDPE, HDPE), acrylate and methacrylate polymers such as polymethylmethacrylate (PMMA), polycarbonate (PC), polyvinyl chloride (PVC), polyethylene terephthalate (PET) and mixtures of two or more thermoplastic polymers of these types.

Monovinylidene aromatic polymers are a preferred thermoplastic polymer for use in the sheet materials according to the present invention and include homopolymers and copolymers having at least 50 percent by weight, preferably at least 70% by weight, and more preferably at least 75% by weight and most preferably at least 90% by weight of a least one monovinylidene aromatic monomer incorporated into the final resin as the monomeric repeat units. Preferably, the monovinylidene aromatic monomer is of the formula:

$$\begin{array}{c} R' \\ | \\ Ar\text{-}C{=}CH_2 \end{array}$$

wherein R is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Typical monovinylidene aromatic monomers which can be used include: styrene, alpha-methylstyrene, all isomers of vinyl toluene, especially paravinyltoluene, all isomers of ethyl styrene, propyl styrene, vinyl biphenyl, vinyl naphthalene, vinyl anthracene and the like, and mixtures thereof. Mixtures of two or more monovinylidene aromatic monomers may be employed to prepare the monovinylidene here affect polymer as may mixtures of one or more monovinylidene aromatic monomer with one or more other copolymerizable monomers. Examples of such copolymerizable monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride.

In addition, the monovinylidene aromatic polymer can further comprise a dispersed rubbery polymer or elastomer to provide improved toughness and/or impact resistance, these types of monovinylidene aromatic polymers being referred to as rubber-modified or high impact. The rubbery polymer may be incorporated by physically mixing or by polymerization of the monovinylidene aromatic monomer in the presence of predissolved rubbery polymer to prepare impact modified, or grafted rubber-containing products. Specifically, the polymer can be a high impact polystyrene resin. Additionally, the process of the present invention can utilize blends or combinations of any of the polymers mentioned above. Examples of suitable monovinylidene aromatic polymers are general purpose polystyrene (GPPS), high impact polystyrene (HIPS), styrene copolymers, such as poly(styrene acrylonitrile) (SAN) and its butadiene rubber modified version referred to as ABS.

Polyolefins are also a preferred thermoplastic polymer and include the homopolymers and copolymers of various alpha olefin monomers such as ethylene, propylene, 1-butene, isobutylene, pentene-1, 3-methyl-1-butene, 1-hexene, 3,4-dimethyl-1-butene, 1-heptene, octene and 3-methyl-1- hexane, etc., including their copolymers with one or more additional copolymerizable monomers including, other alpha olefins and various known copolymerizable monomers including vinyl acetate, methylacrylate, ethyl acrylate, methyl methacrylate, acrylic acid, itaconic acid, maleic acid, and maleic anhydride. Polyolefins include polyethylene, polypropylene, linear low density polyethylene, low density polyethylene, high density polyethylene, olefinic copolymers such as ethylene-octene copolymers and the like. In a preferred polyolefin, a preferred olefin monomer is ethylene or propylene and a most preferred polyolefin is polypropylene.

The multilayer sheet material according to the present invention has a non-foamed thermoplastic polymer surface layer A which is generally selected to provide the appearance or aesthetic side of the sheet or part/article prepared therefrom. This layer is generally prepared to be relatively thin and from a material that may be needed for any specific performance or appearance aspects in the final application. For example, such material may be selected from the range of thermoplastic polymers described above and combined with any incorporated additives/components to provide desired combinations of gloss, color, printability, paintability, weatherability, UV resistance, stiffness, etc.

The non-foamed thermoplastic polymer surface layer is generally provided on the multilayer sheet material in a relatively thin layer but is different and thicker than either a skin layer that will typically be formed inherently when simply preparing a foamed sheet material or the film layers (on the order of from 50 to 100 μm) that are sometimes provided on foam sheet material. The thickness of the non-foamed thermoplastic polymer surface layer A in these sheet

materials is typically reduced as much as possible to provide maximum savings in raw material and thermoforming process energy, with the layer thicknesses preferably generally less than 6 mm, preferably less than 5 mm, more preferably less than 3 mm and most preferably less than 2 mm. It should also be noted that the claimed multilayer sheet materials according to the present invention can comprise an interior-located non-foamed thermoplastic polymer surface layer and/or the surface layer could be comprised of one or more additional sub-layers and/or a thin film surface layer, depending upon the coextrusion or film lamination technology that might optionally be employed to make the sheet material structures according to the present invention. In a preferred embodiment, the total thickness of non-foamed thermoplastic polymer layer(s) in the multilayer sheet, including the non-foamed surface layer and any other non-foamed layers, wherever located, is less than the total thickness of the foamed thermoplastic polymer layer(s). Preferably, however, for product cost savings and optimum process effectiveness and simplicity, the non-foamed thermoplastic polymer surface layer is a single thermoplastic polymer layer with optional surface coating layer and/or adhesive sub-layer and, most preferably, a single thermoplastic polymer surface layer.

With regard to the preparation of the foamed thermoplastic polymer layer, a broad range of technologies are known and can be employed. The foamed layer of the multilayer sheet of the present invention may be produced by vacuum foaming, by physical agitation of the molten thermoplastic resin composition mixture or by incorporating a blowing agent into the polymer composition. In a preferred embodiment a blowing agent is incorporated into the thermoplastic polymer composition to provide a foamable intermediate polymer composition.

Physical blowing agents are generally compressed gases or liquids with low boiling points. Chemical blowing agents are generally solid chemical compounds which decompose and generate gas, such as nitrogen, ammonia or carbon dioxide. The foamable intermediate is then allowed to expand (i.e., "foam") by heat activation of the gas-generating chemical blowing agent and/or expansion of the low boiling point gaseous physical blowing agent upon extrusion of the foamable intermediate into a zone of lower pressure. The blowing agent(s) which may be used include the known physical blowing agents, chemical blowing agents or a combination thereof.

Suitable physical blowing agents include but are not limited to carbon dioxide (CO2), nitrogen (N2), water (H2O), aliphatic hydrocarbons, such as propane, butane, isobutane, pentane, neopentane, isopentane and hexane, alicyclic hydrocarbons, such as cyclobutane, cyclopentane and cylohexane, and halogenated hydrocarbons, such as methyl chloride, methylene chloride, dichlorofluoromethane, trichlorofluoromethane and dichlorodifluoromethane. A preferred physical blowing agent comprises carbon dioxide. Carbon dioxide is preferably used in the practice of the present invention as a liquid, although use of the carbon dioxide gas would also be acceptable. Nitrogen is preferably used as a gas, while water is typically used as a liquid, although any form is acceptable.

Chemical blowing agents include sodium bicarbonate, ammonium carbonate and ammonium hydrogencarbonate, citric acid or citrates, such as sodium citrate, sodium glutaminate, phthalic anhydride, benzoic acid, benzoates, such as aluminum benzoate, azodicarbonamide, azoisobutyronitrile and dinitropentamethylene. A preferred chemical blowing agent comprises mixtures of sodium bicarbonate and citric acid, including Foamazol 72 brand CBA which is a concentrate containing a mixture of citric acid and sodium bicarbonate in a pellet form commercially available from Bergen International.

The blowing agent is generally employed in amounts as may be needed to provide the desired amount of density reduction in the foam layer. The term "density reduction" and the density reduction percentage mean the percentage the density is reduced in the foam layer and/or the sheet structure by using chemical and/or physical blowing agent. For example, from a starting polymer (solid sheet) density of 1 g/cc, reduction of density to 0.9 g/cc is a 10% density reduction, to 0.85 g/cc is a 15% density reduction. In order to have a combination of cost effectiveness and sheet performance, the foamed thermoplastic polymer layer, desirably has a density reduction of at least 5 percent ("%") based on starting thermoplastic polymer density, preferably at least 10 %, most preferably at least 15 %. In order to maintain sheet performance properties and thermoformability, the foamed thermoplastic polymer layer desirably has a density reduction of no more than 40 percent ("%") based on starting thermoplastic polymer density, preferably up to 35 %, more preferably up to 30 %, most preferably up to 25 %. Preferably these density reduction ranges and levels are provided in the final multilayer sheet structure.

The amount by weight of active chemical blowing agent incorporated into the foamable composition to provide a desired level of density reduction is dependent upon the efficiency and effectiveness of the particular blowing agent but it is generally added in amounts of at least 0.016, preferably at least 0.02 and more preferably at least 0.16 weight percent based on the total weight of chemical blowing agent active ingredient, and up to amounts of 0.8, preferably 0.4, and more preferably 0.36 weight percent based on the total weight of chemical blowing agent active ingredient and foamable polymer composition.

With regard to the use of gas-generating liquid or other physical blowing agent in a foam extrusion process, the added amount of physical blowing agent incorporated into the foamable composition depends upon the desired level of density reduction and the efficiency and effectiveness of the particular blowing agent but it has been found to be suitable to employ amounts of at least 0.0001, preferably at least 0.001, more preferably at least 0.01 and more preferably at least 0.063 weight percent based on the total weight of physical blowing agent and up to amounts of 0.7 weight

percent, preferably up to 0.3, more preferably up to 0.2 and most preferably up to 0.128 weight percent based on the total weight of physical blowing agent.

The foamable thermoplastic polymer composition may optionally comprise a nucleating agent in order to control the size of foam cells. Preferred nucleating agents include finely divided inorganic substances, such as barium sulfate, barium carbonate, calcium sulfate, calcium carbonate, lead sulfate, silica, silicon dioxide, silicates, such as calcium silicate, talc, clay aluminum dioxide, aluminum silicates, sulfides, titanium dioxide, magnesium oxide, magnesium carbonate, clay, carbon, metal powder, zinc oxide, asbestos, glass fibers, barium stearate, and diatomaceous earth. The particle sizes of the finely divided inorganic substance nucleating agents are generally from 0.005 to 10 micrometer ("μm" or "micron"), preferably from 0.01 to 1 micron. An optional finely divided inorganic nucleating agent ingredient may be employed in amounts of at least 0.001 parts by weight per hundred weight parts polymer resin, preferably at least 0.02 parts by weight per hundred weight parts of a polymer resin. In general the optional nucleating agent should be used in amounts less than 10 parts by weight per hundred weight parts of polymer resin, preferably less than 2 parts by weight per hundred weight parts polymer resin.

It has also been found that small amounts of a chemical blowing agent, insufficient to generate significant density reduction, can however provide nucleation in the physically blown thermoplastic polymer. These optional nucleating agents, based on their active ingredient and effectiveness, may be employed in amounts of at least 0.0004 parts by weight per hundred weight parts polymer resin, preferably at least 0.008, more preferably at least 0.04, and more preferably at least 0.08 parts by weight per hundred weight parts of a polymer resin. In general these optional nucleating agents should be used in amounts less than 0.2 parts by weight per hundred weight parts of polymer resin, preferably less than 0.15, more preferably less than 0.14, and more preferably less than 0.12 part by weight per hundred weight parts polymer resin.

As mentioned above, the non-foamed thermoplastic polymer layer can be prepared from the same or different polymer selected from among those listed above. Preferably the layers of the sheet structures according to the present invention are prepared from the same polymer or same polymer type to provide optimal layer compatibility and adhesion and maximize the opportunity to recycle the scrap and final products. Preferably, for refrigerator liner applications, both layers are thermoplastic monovinylidene aromatic polymers, with preferably the foamed layer selected from among those known to best provide environmental stress cracking resistance.

There may also be situations where the multilayer sheet comprises two or more foamed thermoplastic layers. Foaming might be optimized for the purpose of maximum and/or cost effective density reduction in an inner foam layer and a different foamed thermoplastic layer might be used as a surface layer and be tailored to obtain optimized surface properties in terms of promoting adhesion to polyurethane or other insulating foam component. Therefore, as with non-foamed layer(s), the multilayer sheet according to the present invention may comprise one or more optional layers in addition to or as part of the foamed thermoplastic surface layer. As used herein, the total thickness of the "foamed" thermoplastic polymer layer in the multilayer sheet, includes all the foamed layers, wherever located. Preferably, however, for product cost savings and optimum process effectiveness and simplicity, the multilayer sheet comprises only the non-foamed surface layer(s) and a single foamed thermoplastic polymer surface layer as the foamed thermoplastic polymer layer with an optional non-foamed adhesive sub-layer and, most preferably, just the single foamed thermoplastic polymer surface layer.

The multilayer sheet structures according to the present invention can also comprise an optional non-foamed surface layer (C) that could be prepared from any of the thermoplastic polymers as mentioned above but would preferably be the same as or similar to non-foamed surface layer (A). If used, this layer would provide a coating or skin layer to the foamed layer (B) and provide what is referred to as an ABA structure. If used, optional non-foamed surface layer (C) would have a thickness less than that of non-foamed surface layer (A), generally on the order of at least 0.03 millimeters, preferably at least 0.05 mm, and more preferably at least 0.07 mm and less than 1 mm, more preferably less than 0.7 mm and most preferably less than 0.5 mm. It should be noted that for application of further insulating foam layers to the multilayer sheets according to the present invention for producing thermally insulating articles, surface treatments of optional non-foamed surface layer (C) may be needed in order to obtain sufficient adhesion and surface coverage for the insulating foam. In one embodiment of the present invention the foamed layer (B) provides the second surface layer of the multilayer sheet and optional non-foamed surface layer (C) is not employed.

In a preferred embodiment of the present invention, for obtaining desirable raw material and thermal forming process energy savings, the foamed layer or layers of the multilayer sheets according to the present invention have a total thickness that is thicker than the non-foamed or solid thermoplastic polymer layer(s). The relationship between the foam and non-foamed layer thicknesses is referred to as a "foam to solid thickness ratio" and when the total foam layer thickness is greater than the total solid layer thickness, this is referred to as a "foam to solid thickness ratio" of greater than 1. Preferably the relative thickness of the foamed polymer layer(s) is greater than 50%, more preferably greater than 55%, more preferably greater than 60%, more preferably greater than 65%, and most preferably greater than 70% of the thickness of the multilayer sheet material. These relative thicknesses correspond to the preferred "foam to solid thickness ratios" of preferably greater than 1, more preferably greater than 1.22, more preferably greater than 1.50,

more preferably greater than about 1.86, and most preferably greater than 2.33 respectively.

Provided that the above-described layers and relative layer thicknesses are obtained, there are various known methods and processes which can be used for preparing or applying layers to the multilayer sheet, including coextrusion, extrusion coating, and/or film lamination. All of these processes and their use to provide layered sheet materials are generally well known to the practitioner in the field of making and using thermoplastic polymer sheet materials and, utilizing the teachings of the relative layer thicknesses provided in the present application, can be readily used to prepare multilayer sheet materials according to the present invention. See generally The Definitive Processing Guide and Handbook, by Giles, Harold F. Jr., Wagner, John R. Jr. and Mount, Eldridge; published in 2005 by William Andrew Publishing/Plastics Design Library which has relevant sections that are incorporated herein by reference: Part VI: Co extrusion at page 391; Part VII Sheet and cast film at page 435; and Part VII: Extrusion coating and lamination, at page 465.

For example, a coextrusion process is also described in USP 6,544,450 which can be adapted to provide a combination of foamed and non-foamed surface layers according to the present invention. In USP 6,589,646 a film lamination process is shown to provide a foamed layer film onto a non-foamed thermoplastic polymer layer.

In preferred embodiments of the present invention, multilayer sheet according to the present invention is used to provide an improved thermoforming process and improved thermoformed articles. Thermoforming is a generally well known technology for providing shaped parts or articles from a thermoformable thermoplastic sheet material. Thermoformed parts or articles are particularly suitable for producing thermally insulating moldings, such as shipping crates, heat accumulators, refrigeration or freezer equipment or components, in particular refrigerator doors by further application of an additional insulating foam layer such as a polyurethane foam.

Thermoforming processes are known in the art and can be done in several ways, as taught for example in "Technology of Thermoforming"; Throne, James; Hanser Publishers; 1996; pp. 16-29. In a "positive" thermoforming process a gas or air pressure is applied to the softened sheet, the sheet is then stretched and drawn out like a bubble and a male mold is brought into the "bubble" from the inside. Then vacuum is applied to further draw and conform the part to the male mold surface. In this thermoforming process biaxial stretching/orientation is done primarily in one step when there is a gas or air pressure applied to the softened sheet. The molding step is then completed with the vacuum and male mold to freeze the orientation into the sheet for a good balance of physical and appearance properties.

In a "negative" thermoforming process a vacuum or a physical plug is applied to the heat softened sheet and stretches and draws the sheet to nearly the final part size. Then, positive air pressure from the inside or further external vacuum from the outside draws and conforms the sheet against an outer, female mold, the orientation is frozen into the polymer and the sheet is formed into the article.

In the types of thermoforming processes typically employed with refrigerator liners, the extruded thermoformable sheets are formed on rotary or continuous in-line thermoforming equipment where sheets are first transported to the different heating sections (preheating by contact heating followed by IR heating) before going to the "positive" forming section. As generally known by those skilled in the art, during this preheating/heating, the sheets are heated to a thermoformable, heat-softened, heat-plastified temperature that depends upon the polymer. Generally, for amorphous polymers this is a temperature of about 20 to about 60° C above their glass transition temperature (" Tg"). Generally for polypropylene and semi-crystalline polymers, this is a temperature just below their melting temperature.

In the forming section the heat-plastified sheet is stretched by creating and pulling a vacuum. The produced bubble is sometimes further preformed by making use of a plug assist, such as, for example, for forming the freezer compartment. This is followed by draping and shaping the sheet over the rising "positive" mould and then the corners and shelves guides, etc. are pulled into the mold by applying a vacuum. After removal from the tool the part can be trimmed, holes punched, and corners cut out as needed in order to produce the liner.

The general steps performed in a process for producing a thermoformed part, such as a refrigerator liner, are:

A. heating a sheet to a heat softened, heat-plastified thermoformable state;

B. applying gas, vacuum and/or physical pressure to the heat softened, heat-plastified, thermoformable sheet and stretching the sheet to nearly the final part size;

C. conforming the sheet by vacuum or pressure to a mold shape; and

D. separating the thermoformed part from the mold.

Thermoformed parts or articles produced from the multilayer sheet according to the present invention are particularly suitable for producing thermally insulating moldings, such as shipping crates, heat accumulators, refrigeration or freezer equipment or components, in particular refrigerator liners (including both the door liners and the interior cabinet liners) by further application of an additional thermally insulating foam layer, such as a polyurethane foam, preferably onto a foamed thermoplastic polymer surface layer. For example, as shown in Figure 3, in the case of a foamed refrigerator

cabinet liner 1, the thermoformed liner part 4 is located in the exterior casing or enclosure structure of the refrigerator 2, and having a layer of thermally insulating foam 3. Preferably the foam is provided by filling a cavity or space between the liner and exterior casing with a foamable mixture. For example, a foamable polyurethane mixture can be placed or injected in the cavity area between the thermoformed liner part (preferably in contact with a foamed surface layer side) and the housing or other outside enclosure, including a refrigerator cabinet housing, a refrigerator door casing or other enclosure. The thermally insulating layer can also be provided by other known foams or foaming techniques.

In this case of preparing a thermally insulating molding, the thermoforming steps above are followed by the further general foaming step:

E. providing a thermally insulating foam layer, such as a polyurethane foam, to the surface of the thermoformed part, preferably a foamed surface layer, and preferably by providing a foamable mixture in a cavity or space that has been provided between the thermoformed part surface and a exterior casing or enclosure structure, preferably of a refrigerator.

As generally known, in refrigerator liners, one of the most important properties is environmental stress crack resistance ("ESCR") which is the required chemical resistance of the resin to blowing agents used in the PU insulation, to cleaning agents and to oil-containing foodstuffs that come in contact with the interior of the liner. In the phenomenon known as an environmental stress cracking, the hydrocarbon blowing agents involved in applying and producing the polyurethane foam as well as oily contents of refrigerated foods can attack or deteriorate the surface of the molded plastic part surface and cause it to crack or fail at relatively low levels of force or stress. In this situation, plastics that are simultaneously exposed to a liquid or vapor chemical stress cracking agent and put under a stress tend to fail at lower stresses or shorter times than they would in a dry, air environment. For polymers such as HIPS which fail by crazing, the stress cracking agents are believed to plasticize the polymer in the vicinity of surface defects. Surface defects act as stress concentrators and as craze initiation sites. If an applied stress and a stress cracking agent are both present, crazes will initiate and grow from the defects at lower stresses than if no liquid or vapor chemical stress cracking agent were present. It has been found that thermoformed parts prepared from the sheet materials according to the present invention maintain very good levels of ESCR while using less polymer and/or blowing agent than sheet structures according to the prior art.

Although it is known that a sheet material with a thin layer of foamed thermoplastics can be used to prepare some articles and or provide a foamed surface layer (i.e., US Patent 6,589,646), it would not be expected that a sheet material with a thicker layer (i.e., increasing the "foam-to-solid ratio") can provide an improved thermoforming process

However, it was surprisingly found according to the present invention that a sheet material comprising a thicker foam layer and thinner solid layer, when thermoformed into parts, provides good balances/combinations of properties including combinations of thermoformed part thickness distribution (especially in critical, thin sections of the thermoformed part), ESCR performance, sheet stiffness, and thermoforming process energy savings. Thus, the sheet structures according to the present invention enable improved thermoformable sheet extrusion, improved deep-draw thermoforming throughput (reduction of the cycle time) and an energy cost reduction in the thermoforming process compared to solid plastic sheet and/or multilayer sheet based on a thin foam layer. In one embodiment, the present invention is a thermoforming process where the production configuration utilizes the sheet structures according to the present invention and standard, currently available sheet extrusion and thermoforming equipment. Benefits are also provided in improved thermoformed insulating parts or articles comprising an additional insulating foam layer, such as thermoformed refrigerator liners having an additional insulating foam material layer applied to the thermoformed part, having improved uniform application and adhesion of the additional insulating foam material, especially polyurethane foam.

It has been found that with the sheet materials according to the present invention, when a foam or foamable mixture, such as foaming polyurethane, is applied to provide a thermal insulating layer, a foam surface layer also facilitates complete and uniform polyurethane foam coverage on to the foam surface layer of the thermoformed parts with good foam adhesion while maintaining sufficient sheet rigidity and environmental stress cracking resistance.

The following examples are provided to illustrate various embodiments of the invention. They are not intended to limit the invention as otherwise described and claimed. All numerical values are approximate, and all parts and percentage are by weight unless otherwise indicated. The following nomenclature and/or abbreviations are used in the examples.

Experiments 1 through 4 represent examples of the present invention. As summarized in Table 1 below, 4.0 mm multilayered thermoplastic sheets were extruded on a Reifenhauser coextrusion line with a non-foamed thermoplastic polymer surface layer and a foamed thermoplastic polymer surface layer layer provided by using chemical blowing agent ("CBA") or CO2 physical blowing agent ("PBA") with CBA nucleating agent. STYRON A-TECH 1175 brand high impact polystyrene ("HIPS") thermoplastic polymer was used for both the foamed and non-foamed layers. In a feedblock coextrusion process with two extruders, the blowing agent-containing HIPS and HIPS without blowing agent are coextruded through a flat extrusion die and cooled by pulling through a vertically arranged three-roll stack. This produces a coextruded

sheet according to the present invention that is 4 mm thick and having a 3 mm foamed layer with a 1 mm non-foamed or solid layer.

The blowing agent-containing HIPS resin layer, as indicated in Table 1 below was provided with the indicated amounts of the CO2 physical blowing agent and/or contained the indicated amounts of dispersed CBA. Here the CBA is Foamazol 72, a mixture of citric acid and sodium bicarbonate in a masterbatch with polystyrene from Bergen International which provides 40 weight % of active ingredient and, in turn, generates 0.2 grams of CO2 per gram of CBA. The term "CBA wt %" in Table 1 below means the weight percent of CBA incorporated into the thermoplastic polymer of the foamable/foamed layer (as a 40% active ingredient masterbatch). For example, for Experiment 4, 100 grams foamable polystyrene contained 0.5 gram CBA masterbatch providing 0.2 grams active CBA, providing 0.04grams CO2 in the foamable polystyrene layer. The CBA was incorporated into the thermoplastic polymer by melt mixing in the extruder.

For the incorporation of physical blowing agent into the foamed layer, the HIPS is fed into the extruder of a sheet coextrusion line having a high pressure piston pump to supply CO2 into the extrusion barrel at the vent port location where it is mixed with the plastified, molten polymer. The CO2 physical blowing agent is mixed into the molten polymer stream by means of a screw designed to mix the liquefied blowing agent and polymer while moving "downstream" without allowing the added liquid to force back "upstream". The term "CO2 PBA wt%" in Table 1 below refers to the weight percent of carbon dioxide gas (liquid) mixed into the molten polymer stream of the foamable/foamed layer based on the weight of the thermoplastic polymer. The term "CO2 Release (wt%)" means the total weight percentage of carbon dioxide gas released/provided by the CBA and/or PBA based on the thermoplastic polymer in the sheet structures and is calculated from the known amounts of blowing agents added using the ideal gas law.

The "Sheet Density" in grams per cubic centimeter (g/cc) is calculated by measuring the sheet weight and dividing it by the calculated sheet volume and is shown in Table 1 below. The "foam layer density" ($\rho_{foam}$) is calculated by the formula:

$$\rho_{foam} = (\rho_{overall} * t_{overall} - \rho_{solid} * t_{solid})/t_{foam}$$

where $\rho_{foam}$ is the density of the foam layer, $\rho_{overall}$ is the overall sheet density, $t_{overall}$ is the overall thickness of the sheet, $\rho_{solid}$ is the density of the solid layer, $t_{solid}$ is the thickness of the solid layer, and $t_{foam}$ is the thickness of the foam layer.

The term "Density reduction %" means the percentage the density of the foamed thermoplastic and the sheet structure were reduced by using chemical and/or physical blowing agent and are shown in Table 1.

The sheet is pulled and compressed by a three roll polishing stack to provide the final 4 mm sheet and layer thicknesses with the properties as shown in Table 1 below.

These sheet samples are then 'deep draw' thermoformed into liners for a small-sized refrigerator ("mini fridge"). The mini fridge liners were thermoformed on an Illig UA-100 laboratory scale thermoforming unit from the indicated Experimental and Comparison solid sheet samples. In these thermoforming tests the two sheet samples were thermoformed as follows into mini fridges with all the process settings of the thermoforming process the same for both sheets: temperature setting IR heaters, mould temperature, preblowing pressure, preblowing time, and cooling time:

A. heating sheet material to a heat softened, heat-plastified thermoformable state that starts to sag;

B. applying gas pressure to the heat softened, heat-plastified, thermoformable sheet and stretching the sheet to nearly the final part size;

C. conforming the sheet by vacuum to a mold shape; and

D. separating the thermoformed part from the mold.

It is noted however, as summarized below in Table 2, that the sheets according to the present invention required less heating time (40 versus 55 seconds) and therefore provided a 27% reduction in process cycle time as compared to a solid sheet.

The evaluation mini fridge liner structure is shown in Figures 1 through 3 and represents a two compartment, "inner" (i.e., cabinet) liner with dimensions that are down sized in physical size by approximately half from an actual full-size refrigerator. The design of the mini-fridge liner has several features to make the testing (including thermoforming and ESCR) more severe. Important aspects of this design are: (i) sharp corners (8 mm radius, shown as 50 on Figure 2), (ii) designed shelve guides (3 mm radius, shown as 60 on Figure 2), and (iii) the very deep draw depth (shown as "d" on Figure 2) of the divider (5 in Figures 2 and 3) between the two compartments and correspondingly high draw ratio

for that relatively small area of the thermoformable sheet. Obtaining the critical, minimum thickness of 0.6 mm at the wall (30 of Figure 2) of the deeply drawn compartment division (5 in Figures 2 and 3) is determinative of successful sheet thermoformability and part thermoforming and was achieved using the various 4 millimeter thermoformable sheets utilized in the experiments below.

For testing the structural stiffness of the wall in the mini fridge structure, an MTS 810 hydraulic frame is used to displace the liner by 10 mm at a specific location (marked by the "x" and shown as 100 on Figure 2). The resulting resistance force is recorded as a function of displacement. The force at final deformation, shown as "Maximum Force" in Newtons, is a measure of the overall stiffness of the liner. To remove the effects of the density of the sheet and compare properties on the basis of per gram polymer, the deformation force is divided by the sample weight in order to get the recorded structural stiffness per gram polymer as shown in Table 1. This is a non destructive test and was duplicated for each sample unit showing a relatively high degree of consistency and reproducibility.

Table 1 -- Extruded 4 mm Sheet and Thermoformed Refrigerator Liner Experiments

| Exp # | Primary Blowing Agent | Foam to Solid Thickness Ratio | CBA (wt%) Active Ingredient | CO2 PBA (wt %) | CO2 Release (wt%) | Foam Layer Density (g/cc) | Foam Layer Density Reduction (%) | Sheet Density Reduction (g/cc) | Sheet Density Reduction (%) | Maximum Force (N) /duplicate |
|---|---|---|---|---|---|---|---|---|---|---|
| Solid* | None | n/a | n/a | n/a | n/a | n/a | n/a | 1.04 | n/a | 27.3/26 |
| 1 | PBA | 3 | 0.1 | 0.039 | 0.044 | 0.82 | 21.3% | 0.87 | 16 | 14.8/14 |
| 2 | PBA | 3 | 0.1 | 0.048 | 0.051 | 0.76 | 26.6% | 0.83 | 20 | 14.1/13.80 |
| 3 | CBA | 3 | 0.24 | 0 | 0.036 | 0.82 | 21.3% | 0.87 | 16 | 14.7/14.7 |
| 4 | CBA | 3 | 0..2 | 0 | 0.03 | 0.86 | 17.3% | 0.90 | 13 | 18.8/17.5 |

*Comparative Experiment, not an example of the present invention.

The analysis of the Table 1 results shows that the claimed multilayer foamed sheet structures and foaming process for their production are efficient and effective and provide significant density and weight reductions.

Analysis of the mini fridge structural stiffness testing results shows good performance by the sheet materials having a foam layer although maximum forces required to deform the structures by 10 mm was less than for the solid liner reference material, as would be expected.

As mentioned above and shown by the Table 2 summary of the mini fridge liner thermoforming experiments that were done, compared to a solid sheet, the use of the foamed sheet of Experiment 2 according to the present invention for thermoforming reduces the heating time and reduces the thermoforming cycle by 27% compared to a solid sheet. In these thermoforming tests the two sheet samples were thermoformed into mini fridges with all settings of the thermoforming process the same for both sheets.

Table 2 -- Thermoforming Experiments

| | Solid | Sheet 2 |
|---|---|---|
| Overall sheet gauge (mm) | 4 | 4 |
| Heating time | 55 | 40 |
| Cycle time reduction % | 0 | 27 |

For exposure to liquid environmental stress cracking agents, such as food oils or liquid blowing agents, one of the most common lab simulations to test ESCR is a test based on ISO 4599 (ASTM D543). Thermoformed samples of multilayer sheet were evaluated for resistance to environmental stress cracking under exposure to liquid environmental stress cracking agents in a test similar to ISO 4599. In this test dog bone-shaped, ISO-type cut tensile bars are kept at a constant strain using a bending clamp, also called a "former", that holds the bar in a bent or strained position. The nominal strain, ε, at the surface of the specimen is determined by the radius of the bend that is provided in the former and is calculated as follows:

$$\varepsilon = \frac{d}{2r + d} \times 100\%$$

where d is the thickness of the specimen and r the radius of the former.

These bars, remaining bent and under strain (0.35%) in the former, are then exposed (immersed) at room temperature to corn oil to test "foodstuff' ESCR. The tensile strength property (elongation at rupture in percent as measured by ISO 527 or ASTM D638 M) is measured after increasing immersion time (in days) and compared to the starting tensile properties. The less this property is reduced from the original property measurement, the better the material is considered to resist to exposure substance.

Table 3 -- Environmental Stress Crack Resistance

| | Solid Sheet* | | Experimental Sheet 1 | | Experimental Sheet 4 | |
|---|---|---|---|---|---|---|
| Immersion time (Days) | Elongation at Rupture (%) | Tensile Reduction (%) | Elongation at Rupture (%) | Tensile Reduction (%) | Elongation at Rupture (%) | Tensile Reducton (%) |
| 0 | 58 | | 34 | | 31 | |
| 1 | 21 | 64% | 30 | 12% | 32 | -3% |
| 2 | 22 | 62% | 26 | 24% | 33 | -6% |
| 4 | 20 | 66% | 28 | 18% | 26 | 16% |
| 7 | 24 | 59% | 26 | 24% | 25 | 19% |
| 11 | 18 | 69% | 16 | 53% | 21 | 32% |
| *Comparative Experiment, not an example of the present invention. | | | | | | |

As summarized in Table 3 above, the final tensile strength values after 11 days immersion for structures according to the present invention (21 and 16) are satisfactory; this application generally requiring values of at least about 10%. These observed values are roughly the same as the prior art solid sheet after 11 days immersion (18) and, importantly, have relatively low tensile elongation reduction observed from the original properties (53% and 32% tensile elongation loss according to the present invention versus 69% for the solid sheet).

## Claims

1. A multilayer sheet having two surface layers and optionally one or more interior layers, said multilayer sheet comprising a non-foamed thermoplastic polymer surface layer (A), a foamed thermoplastic polymer layer (B) and an optional non-foamed thermoplastic polymer surface layer (C) and having a total sheet thickness of from at least 0.75 to 20 millimeters ("mm") and a foam to solid thickness ratio of greater than 1 and wherein:

   (a) the non-foamed thermoplastic polymer surface layer (A) has a thickness in the range of from 0.75 to 6 millimeters ("mm") and
   (b) the foamed thermoplastic polymer layer (B) has a total density reduction of at least five (5) percent and, in the absence of optional surface layer (C), is a surface layer.

2. A multilayer sheet according to claim 1 wherein the foam to solid thickness ratio is at least 1.86.

3. A multilayer sheet according to claim 1 wherein the foam to solid thickness ratio is at least 2.33.

4. A multilayer sheet according to claim 1 having a density reduction of at least ten (10) percent.

5. A multilayer sheet according to claim 1 having a density reduction of at least twenty (20) percent.

6. A multilayer sheet according to claim 1 having a total sheet thickness of from 1 to 10 mm.

7. A multilayer sheet according to claim 1 having a total sheet thickness of from 2 to 5 millimeters.

8. A multilayer sheet according to claim 1 wherein layer B comprises a foamed monovinylidene aromatic polymer resin selected from the group of HIPS, GPPS, ABS, blends of two or more of these, and blends of one or more of these with one or more additional polymer.

9. A multilayer sheet according to claim 1 wherein layers A and B are coextruded.

10. A multilayer sheet according to claim 1 wherein layer A is film laminated or extrusion coated onto layer B.

11. A multilayer sheet according to claim 1 wherein layer B is foamed using a physical blowing agent or a combination of physical blowing agent and chemical blowing agent nucleating agent or only chemical blowing agent.

12. A thermoformed article prepared from a multilayer sheet according to any one of claims 1 through 10.

13. A thermoforming process comprising:

   A. heating a multilayer sheet according to any one of claims 1 through 11 to a heat softened, heat-plastified thermoformable state;
   B. applying gas, vacuum and/or physical pressure to the heat softened, heat-plastified, thermoformable sheet and stretching the sheet to nearly the final part size;
   C. conforming the sheet by vacuum or pressure to a mold shape; and
   D. separating the thermoformed part from the mold.

14. A process for preparing a thermally insulating molded part comprising providing a thermally insulating foam layer to the thermoformed part produced according to claim 13.

15. A process for preparing a thermally insulating molded part according to claim 14 wherein the thermally insulating foam layer is a polyurethane foam.

**16.** A process for preparing a thermally insulating molded part according to claim 15 wherein the thermally insulating layer is provided in a cavity or space that has been provided between the thermoformed part foam surface layer and an exterior casing or enclosure structure.

**17.** A process for preparing a thermally insulating molded part according to claim 16 wherein the exterior casing or enclosure structure is a refrigerator cabinet or door.

**18.** A thermally insulating molded part prepared according to any one of the claims 13 through 17.

## Patentansprüche

**1.** Mehrschicht-Flächenkörper, der zwei Oberflächenschichten und optional eine oder mehrere Innenschichten umfasst, wobei der Mehrschicht-Flächenkörper eine nichtgeschäumte thermoplastische Polymeroberflächenschicht (A), eine geschäumte thermoplastische Polymerschicht (B) und eine optionale nichtgeschäumte thermoplastische Polymeroberflächenschicht (C) umfasst und eine Gesamt-Flächenkörperdicke von mindestens 0,75 bis 20 Millimeter ("mm") hat und ein Schaumzu-Feststoff-Dickenverhältnis von größer als 1 hat, und wobei:

a) die nichtgeschäumte thermoplastische Polymeroberflächenschicht (A) eine Dicke im Bereich von 0,75 bis 6 Millimeter ("mm") hat und
b) die geschäumte thermoplastische Polymerschicht (B) eine Gesamt-Dichtenreduktion von mindestens fünf (5) Prozent hat und in Abwesenheit der optionalen Oberflächenschicht (C) eine Oberflächenschicht ist.

**2.** Mehrschicht-Flächenkörper nach Anspruch 1, wobei das Schaum-zu-Feststoff-Dickenverhältnis mindestens 1,86 beträgt.

**3.** Mehrschicht-Flächenkörper nach Anspruch 1, wobei das Schaum-zu-Feststoff-Dickenverhältnis mindestens 2,33 beträgt.

**4.** Mehrschicht-Flächenkörper nach Anspruch 1, der eine Dichtereduktion von mindestens zehn (10) Prozent hat.

**5.** Mehrschicht-Flächenkörper nach Anspruch 1, der eine Dichtereduktion von mindestens zwanzig (20) Prozent hat.

**6.** Mehrschicht-Flächenkörper nach Anspruch 1, der eine Gesamt-Flächenkörperdicke von 1 bis 10 mm hat.

**7.** Mehrschicht-Flächenkörper nach Anspruch 1, der eine Gesamt-Flächenkörperdicke von 2 bis 5 mm hat.

**8.** Mehrschicht-Flächenkörper nach Anspruch 1, wobei Schicht B ein geschäumtes Monovinyliden-aromatisches-Polymerharz umfasst, das aus der Gruppe von HIPS, GPPS, ABS, Mischungen aus zwei oder mehreren von diesen und Mischungen aus eins oder mehreren von diesen mit einem oder mehreren zusätzlichen Polymeren ausgewählt ist.

**9.** Mehrschicht-Flächenkörper nach Anspruch 1, wobei die Schichten A und B koextrudiert sind.

**10.** Mehrschicht-Flächenkörper nach Anspruch 1, wobei Schicht A auf Schicht B filmlaminiert oder extrusionsbeschichtet ist.

**11.** Mehrschicht-Flächenkörper nach Anspruch 1, wobei Schicht B unter Verwendung eines physikalischen Treibmittels oder einer Kombination aus einem physikalischen Treibmittel und einem chemischen Treibmittel-Keimbildnermittel oder nur einem chemischen Treibmittel geschäumt ist.

**12.** Warmgeformter Artikel, der aus einem Mehrschicht-Flächenkörper nach einem der Ansprüche 1 bis 10 gefertigt ist.

**13.** Warmformprozess, umfassend:

A. Erwärmen eines Mehrschicht-Flächenkörpers nach einem der Ansprüche 1 bis 11 auf einen wärmeerweichten, wärmeplastifizierten wamformbaren Zustand;
B. Anwenden von Gas, Vakuum und/oder physikalischem Druck auf den wärmeerweichten, wärmeplastifizierten

wamformbaren Flächenkörper und Dehnen des Flächenkörpers auf fast die endgültige Teilegröße;
C. Konformieren des Flächenkörpers mittels Vakuums oder Drucks an eine Formungsform; und
D. Trennen des warmgeformten Teils von der Formungsform.

**14.** Prozess zum Fertigen eines thermisch isolierenden geformten Teils umfassend ein Bereitstellen einer thermisch isolierenden Schaumschicht an dem warmgeformten Teil, das nach Anspruch 13 hergestellt wurde.

**15.** Prozess zum Fertigen eines thermisch isolierenden geformten Teils nach Anspruch 14, wobei die thermisch isolierende Schaumschicht ein Polyurethanschaum ist.

**16.** Prozess zum Fertigen eines thermisch isolierenden geformten Teils nach Anspruch 15, wobei die thermisch isolierende Schicht in einem Hohlraum oder einem Zwischenraum bereitgestellt ist, der zwischen der Thermogeformtes-Teil-Schaum-Oberflächenschicht und einer äußeren Gehäuse- oder Umfassungsstruktur bereitgestellt ist.

**17.** Prozess zum Fertigen eines thermisch isolierenden geformten Teils nach Anspruch 16, wobei die äußere Gehäuse- oder Umfassungsstruktur ein/eine Kühlschrank-Schrank oder -Tür ist.

**18.** Thermisch isolierendes geformtes Teil, das nach einem der Ansprüche 13 bis 17 gefertigt wurde.

## Revendications

**1.** Feuille multicouche ayant deux couches superficielles et facultativement une ou plusieurs couches intérieures, ladite feuille multicouche comprenant une couche superficielle de polymère thermoplastique non expansé (A), une couche de polymère thermoplastique expansé (B) et une couche superficielle de polymère thermoplastique non expansé facultative (C) et ayant une épaisseur totale de feuille allant d'au moins 0,75 à 20 millimètres (« mm ») et un ratio d'épaisseurs de mousse par rapport au solide supérieur à 1 et dans laquelle :

(a) la couche superficielle de polymère thermoplastique non expansé (A) présente une épaisseur dans l'intervalle allant de 0,75 à 6 millimètres (« mm ») et
(b) la couche de polymère thermoplastique expansé (B) présente une réduction de densité totale d'au moins cinq (5) pour cent et, en l'absence de couche superficielle facultative (C), constitue une couche superficielle.

**2.** Feuille multicouche selon la revendication 1, dans laquelle le ratio d'épaisseurs de mousse par rapport au solide est d'au moins 1,86.

**3.** Feuille multicouche selon la revendication 1, dans laquelle le ratio d'épaisseurs de mousse par rapport au solide est d'au moins 2,33.

**4.** Feuille multicouche selon la revendication 1 ayant une réduction de densité d'au moins dix (10) pour cent.

**5.** Feuille multicouche selon la revendication 1 ayant une réduction de densité d'au moins vingt (20) pour cent.

**6.** Feuille multicouche selon la revendication 1 ayant une épaisseur totale de feuille allant de 1 à 10 mm.

**7.** Feuille multicouche selon la revendication 1 ayant une épaisseur totale de feuille allant de 2 à 5 millimètres.

**8.** Feuille multicouche selon la revendication 1, dans laquelle la couche B comprend une résine polymère monovinylidène aromatique expansée choisie dans le groupe comprenant l'HIPS, le GPPS, l'ABS, des mélanges de deux ou plusieurs d'entre eux, et des mélanges d'un ou plusieurs d'entre eux avec un ou plusieurs polymère(s) supplémentaire(s).

**9.** Feuille multicouche selon la revendication 1, dans laquelle les couches A et B sont coextrudées.

**10.** Feuille multicouche selon la revendication 1, dans laquelle la couche A est laminée en film ou enduite par extrusion sur la couche B.

**11.** Feuille multicouche selon la revendication 1, dans laquelle la couche B est expansée en utilisant un agent de

gonflement physique ou une combinaison d'agent gonflant physique et d'agent de nucléation d'agent de gonflement chimique ou seulement d'agent gonflant chimique.

**12.** Article thermoformé préparé à partir d'une feuille multicouche selon l'une quelconque des revendications 1 à 10.

**13.** Procédé de thermoformage comprenant :

A. le chauffage d'une feuille multicouche selon l'une quelconque des revendications 1 à 11 à un état thermoformable plastifié thermiquement, ramolli thermiquement ;
B. l'application d'un gaz, d'un vide et/ou d'une pression physique à la feuille thermoformable, plastifiée thermiquement, ramollie thermiquement et l'étirage de la feuille à presque la taille finale de pièce ;
C. la mise en forme de la feuille sous vide ou sous pression selon la forme d'un moule ; et
D. la séparation de la partie thermoformée depuis le moule.

**14.** Procédé de préparation d'une pièce moulée thermiquement isolante comprenant la fourniture d'une couche de mousse thermiquement isolante à la pièce thermoformée fabriquée selon la revendication 13.

**15.** Procédé de préparation d'une pièce moulée thermiquement isolante selon la revendication 14, dans lequel la couche de mousse thermiquement isolante est une mousse de polyuréthane.

**16.** Procédé de préparation d'une pièce moulée thermiquement isolante selon la revendication 15, dans lequel la couche thermiquement isolante est prévue dans une cavité ou un espace qui a été prévu entre la couche superficielle de mousse de pièce thermoformée et une structure extérieure d'enveloppe ou d'enceinte.

**17.** Procédé de préparation d'une pièce moulée thermiquement isolante selon la revendication 16, dans lequel la structure extérieure d'enveloppe ou d'enceinte est une porte ou caisse de réfrigérateur.

**18.** Pièce moulée thermiquement isolante préparée selon l'une quelconque des revendications 13 à 17.

Figure 1

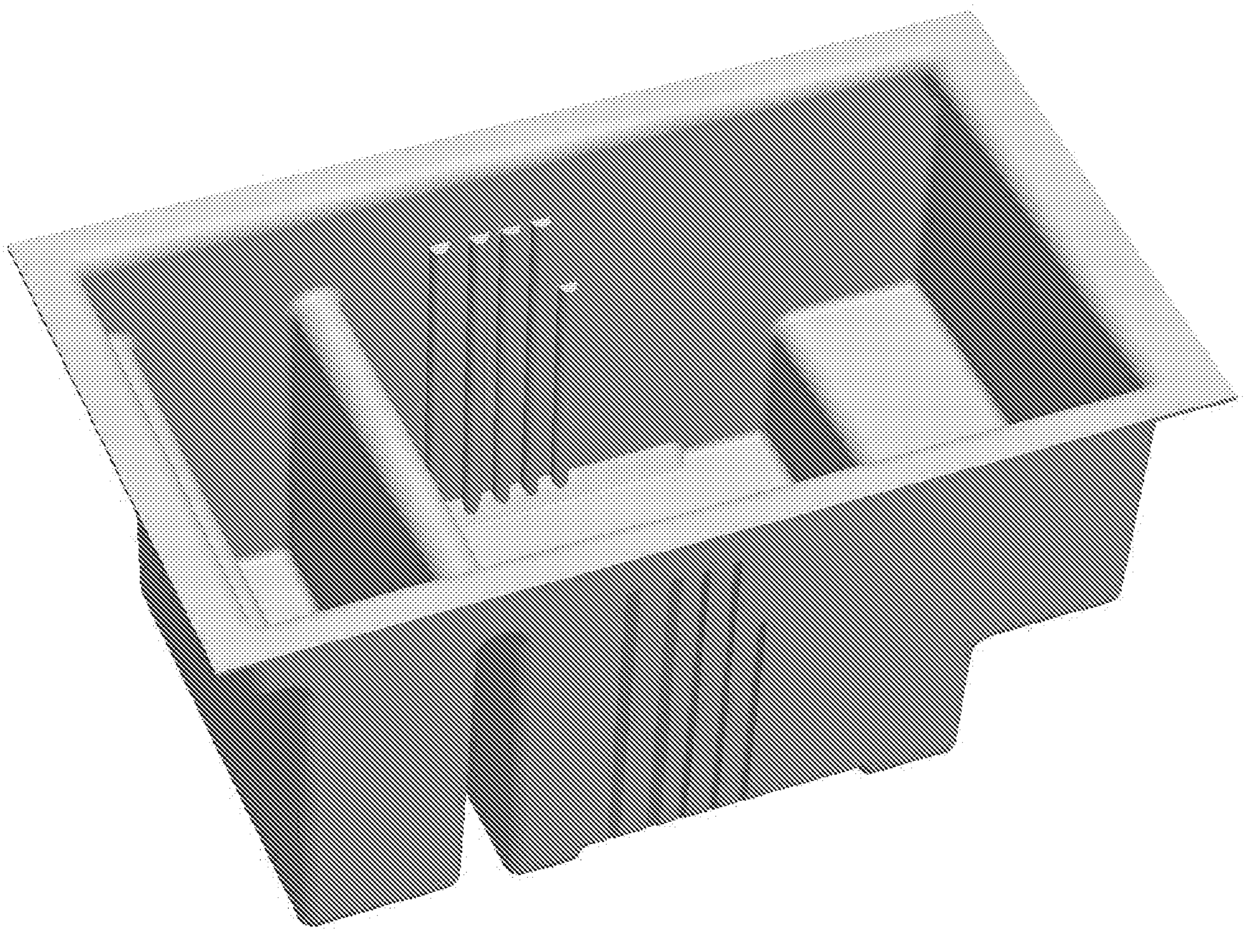

Figure 2

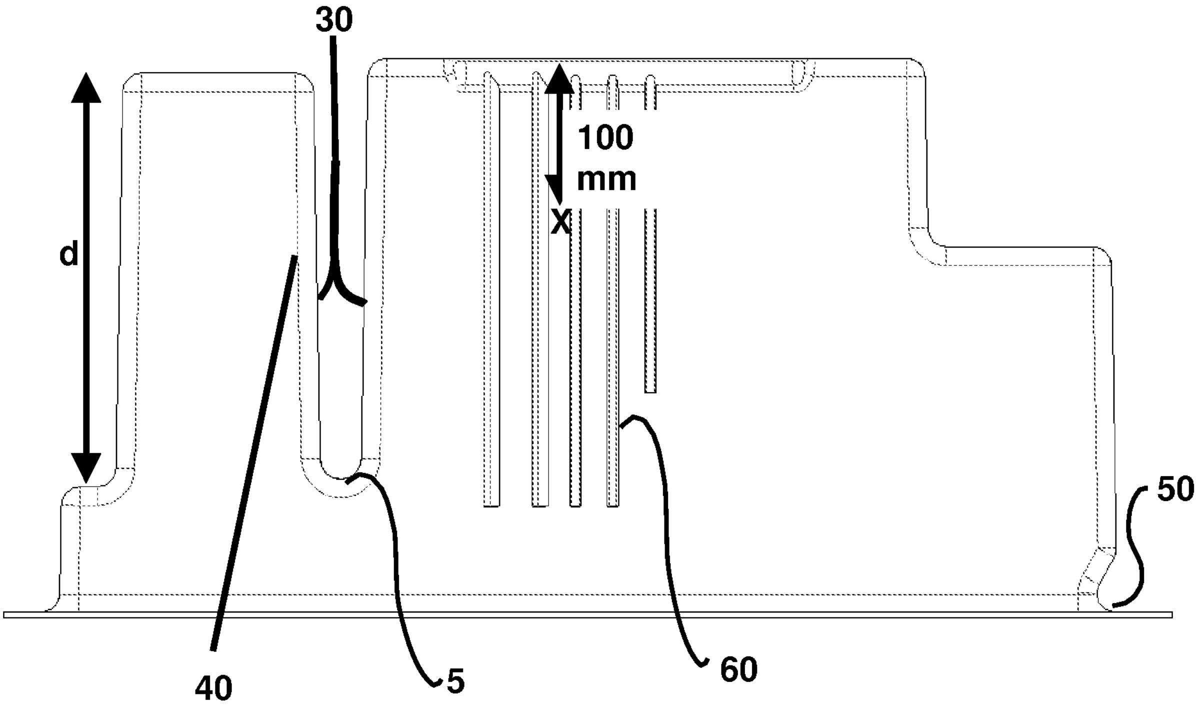

*Figure 3*

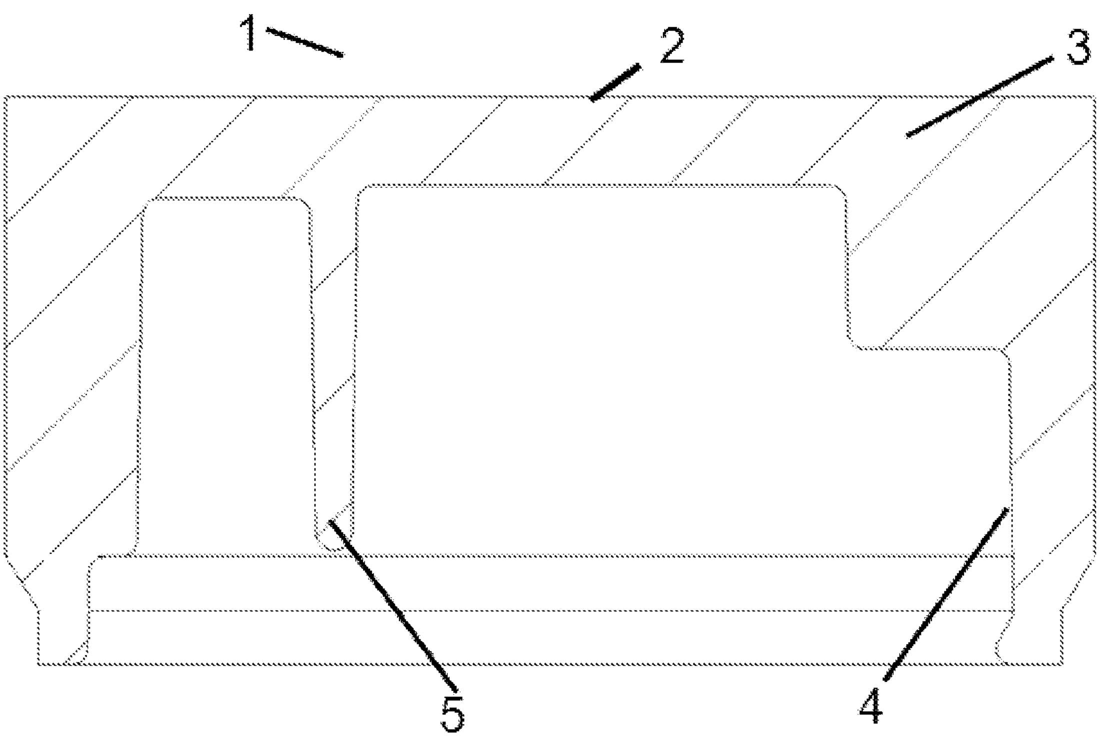

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6544450 B
- US 6589646 B
- GB 1595128 A
- GB 1411132 A
- US 5364696 A
- EP 0084360 A
- US 4069934 A

### Non-patent literature cited in the description


- **GILES ; HAROLD F. JR. ; WAGNER ; JOHN R. JR. ; MOUNT ; ELDRIDGE.** The Definitive Processing Guide and Handbook. William Andrew Publishing/Plastics Design Library, 2005
- **THRONE ; JAMES.** Technology of Thermoforming. Hanser Publishers, 1996, 16-29